# FASCICULE DE BREVET EUROPEEN

(11) **EP 1 931 496 B1**
(45) Date de publication et mention de la délivrance du brevet: **02.05.2012**
(21) Numéro de dépôt: 06806959.0
(22) Date de dépôt: 04.10.2006
(51) Int. Cl.: B23K 26/14

(54) **PROCEDE ET INSTALLATION DE DECOUPE / DE SOUDAGE LASER**
VERFAHREN UND INSTALLATION FÜR LASERSCHNEIDEN/-SCHWEISSEN
METHOD AND INSTALLATION FOR LASER CUTTING/WELDING

(30) Priorité: 05.10.2005 FR 0553001
(43) Date de publication de la demande: 18.06.2008
(73) Titulaire: Commissariat à l'Énergie Atomique et aux Énergies Alternatives, 75015 Paris (FR)
(72) Inventeur: AUBERT, Philippe, F-75016 Paris (FR); DE DINECHIN, Guillaume, F-92130 Issy Les Moulineaux (FR)
(74) Mandataire: Poulin, Gérard
(86) Numéro de dépôt international: PCT/EP2006/067024
(87) Numéro de publication internationale: WO 2007/039619

(56) Documents cités:
- CN-A- 1 640 606
- US-A- 4 707 585

## Description

### DOMAINE TECHNIQUE

Le domaine technique de l'invention est celui des installations de découpe et de soudage par laser de puissance, selon le préambule de la revendication 1, ainsi que des procédés de découpe et de soudage mis en oeuvre à l'aide de telles installations. De tels procédés et installations sont connus du document US 4707585.

L'invention trouve une application particulière dans le domaine de la découpe / du soudage laser de matériaux d'importante épaisseur, notamment des matériaux utilisés dans des installations de l'industrie nucléaire, de l'industrie navale, ou encore de l'industrie automobile ou aéronautique.

A cet égard, il est noté qu'une application encore plus privilégiée de l'invention concerne la découpe laser de matériaux dans le cadre du démantèlement d'installations nucléaires.

### ETAT DE LA TECHNIQUE ANTERIEURE

Dans ce domaine de la découpe / du soudage de pièces par laser de puissance, les installations connues de l'état de la technique sont habituellement refroidies à l'aide d'un dispositif employant de l'eau comme liquide de refroidissement.

Néanmoins, ce type de dispositif de refroidissement à eau peut s'avérer difficile à mettre en oeuvre pour certaines applications, notamment lorsque l'installation est destinée à être utilisée dans des « conditions de chantier ». En effet, le refroidissement à eau est contraignant en ce sens qu'il nécessite une installation complexe intégrant des éléments du type pompe et circuits étanches. De plus, il est noté que des éventuelles fuites peuvent avoir des conséquences graves sur le chantier.

D'autre part, ce dispositif de refroidissement à eau peut même s'avérer extrêmement contraignant lorsque l'installation de découpe / de soudage laser est destinée à être utilisée sur un site nucléaire, notamment lors d'un démantèlement d'installations de ce type, puisque l'eau constitue alors un fluide générateur de déchets à traiter.

Il a par ailleurs été remarqué que lorsque la tête laser de l'installation de découpe / de soudage n'était pas refroidie durant sa mise en oeuvre, celle-ci pouvait rapidement atteindre des températures critiques, souvent supérieures à 50°C, ces températures étant naturellement d'autant plus importantes que la puissance laser utilisée est grande.

De ce fait, il apparaît clairement que les installations de découpe / de soudage non refroidies ne peuvent atteindre des performances de découpe / de soudage élevées même lorsque celles-ci sont capables de délivrer une forte puissance laser, car cette dernière est susceptible de provoquer un échauffement de la tête laser pouvant entraîner sa détérioration.

Cet inconvénient est donc particulièrement contraignant pour les installations nécessitant de déployer des puissances élevées pendant une longue période, comme cela est généralement le cas pour des applications du type découpe / soudage sur « chantier », telle que celle relative au démantèlement d'installations nucléaires nécessitant habituellement des interventions de longue durée avec des puissances élevées dépassant souvent les 4 kW.

### EXPOSÉ DE L'INVENTION

Le but de la présente invention est donc de proposer une installation de découpe ou de soudage laser capable de limiter les risques d'échauffement de la tête laser, et pouvant être utilisée sans contrainte dans tout type d'applications, y compris nucléaires.

Pour ce faire, l'invention a pour objet une installation de découpe / de soudage laser selon la revendication 1.

Ainsi, le dispositif de refroidissement utilisé intègre plusieurs tubes de vortex dont le principe de fonctionnement connu est relativement simple. En effet, un gaz comprimé est injecté radialement dans un dispositif réalisé par exemple en aluminium ou en acier, pour pouvoir être divisé en deux flux de gaz distincts. Au sein de ce dispositif, il est généré un transfert d'énergie cinétique sous forme de chaleur entre les deux flux de gaz, ce qui permet de disposer d'une part d'un flux de gaz chaud s'échappant par une sortie de gaz chaud, et d'autre part d'un flux de gaz froid s'échappant par une sortie de gaz froid opposée à l'autre sortie précitée. Ces deux sorties sont généralement situées aux deux extrémités du tube de vortex, et peuvent chacune disposer de bifurcations afin de constituer plusieurs sorties de gaz chaud ou bien plusieurs sorties de gaz froid.

Avec la présence d'un tel dispositif de refroidissement agissant sur la tête laser, l'échauffement de cette dernière peut être largement minimisé durant le fonctionnement de l'installation, ce qui permet de mettre en oeuvre des puissances laser élevées pendant une longue durée sans risquer de détériorer cette même tête. Les applications du type découpe / soudage sur « chantier » telles que celles relatives au démantèlement d'installations nucléaires sont donc facilement envisageables avec l'installation selon l'invention.

L'avantage découlant de ce qui précède réside dans le fait que les performances de soudage / de découpe peuvent être augmentées, celles-ci pouvant se traduire par une vitesse de découpe / de soudage accrue, et/ou une découpe / une soudure satisfaisante de pièces de plus grande épaisseur pouvant facilement atteindre 100 mm, et/ou une plus grande tolérance dans le positionnement relatif entre la première tête et les pièces à découper / à souder, cette dernière caractéristique étant particulièrement avantageuse dans la cadre d'une découpe industrielle en « conditions de chantier ».

Par ailleurs, un autre avantage de la présente invention concerne l'utilisation de gaz comprimé comme fluide de refroidissement. L'alimentation du tube de vortex est donc très aisée, et surtout, le dispositif de refroidissement n'intègre plus d'eau dont l'incompatibilité avec les applications nucléaires constituait auparavant un inconvénient majeur.

Un avantage additionnel de l'installation selon l'invention concerne la présence d'un flux de gaz chaud sortant du tube de vortex, qui peut être judicieusement utilisé en coopération avec le bain de fusion afin d'augmenter encore davantage les performances de découpe / de soudage.

En effet, lorsque l'installation est destinée à de la découpe laser, le gaz chaud sortant de la sortie de gaz chaud du tube de vortex est préférentiellement destiné à assurer l'expulsion de particules métalliques en fusion hors du bain de fusion créé par le faisceau laser. Par conséquent, ce gaz chaud éjecté du tube de vortex peut avantageusement s'ajouter à un jet de gaz de travail déjà prévu sur l'installation de découpe, ce qui permet d'améliorer l'expulsion des particules hors de la saignée, et donc d'augmenter les performances de découpe. Il pourrait également bien entendu être utilisé comme seule source de gaz de travail, sans sortir du cadre de l'invention.

En outre, lorsque l'installation est destinée à du soudage laser, le gaz chaud sortant de la sortie de gaz chaud du tube de vortex est préférentiellement destiné à assurer un préchauffage des pièces à souder, et/ou une protection du bain de fusion solidifié contre l'air ambiant. Dans le premier cas, le gaz chaud est de préférence éjecté à l'avant du faisceau laser par rapport au sens de soudage, pour pouvoir assurer sa fonction de préchauffage des pièces destinées à être soudées, et donc permettre d'obtenir des performances de soudage accrues. En revanche, dans le second cas, le gaz chaud est de préférence éjecté à l'arrière du faisceau laser par rapport au sens de soudage, et encore plus préférentiellement à l'arrière du bain de fusion liquide. En effet, il s'agit de protéger de l'air ambiant le métal provenant du bain de fusion qui vient de se solidifier, et qui est en cours de refroidissement, afin d'éviter notamment la nitruration et l'oxydation du métal soudé. Un intérêt supplémentaire est que le gaz chaud éjecté permet d'agir sur les cycles thermiques de soudage, contrairement à du gaz froid, ce qui est bénéfique sur les microstructures de solidification, et qui peut par exemple se traduire par une diminution de la dureté du cordon de soudure. De ce fait, l'adjonction de ce flux d'air chaud à l'arrière du faisceau laser et du bain de fusion permet d'améliorer sensiblement la soudabilité des matériaux difficilement soudables, comme ceux connus pour rencontrer des problèmes de trop grande dureté du cordon de soudure.

De plus, le dispositif de refroidissement comporte une pluralité de tubes de vortex alimentés en gaz comprimé. Dans une telle configuration, les tubes de vortex peuvent être montés soit en parallèle, soit en cascade où la sortie de gaz chaud d'un tube de vortex alimente l'entrée d'un tube de vortex lui étant directement consécutif.

Il est noté que de façon générale, le montage en cascade est principalement recherché afin de disposer d'un flux de gaz chaud à haute température, ce qui le rend bien adapté pour les installations de soudage laser dans lesquelles il permet alors un préchauffage très satisfaisant des pièces à souder. Par ailleurs, le montage en parallèle est essentiellement adopté pour disposer d'un débit de gaz chaud / de gaz froid important, ce qui le rend bien adapté pour les installations de découpe laser dans lesquelles le grand débit d'air chaud permet alors une expulsion très satisfaisante des particules métalliques hors de la saignée.

Néanmoins, il est noté que ces deux types de montage des tubes de vortex sont naturellement envisagés pour les deux applications de découpe et de soudage, sans sortir du cadre de l'invention.

De préférence, le tube de vortex utilisé est conçu de manière à produire environ 80% de gaz froid et environ 20% de gaz chaud, ces valeurs ayant été retenues pour assurer un refroidissement optimal de la tête laser, que celle-ci soit destinée à assurer une fonction de découpe ou de soudage.

De préférence, le tube de vortex est conçu de manière à produire du gaz chaud à une température d'environ 80 à 100°C supérieure à une température d'entrée du gaz comprimé, et à produire du gaz froid à une température d'environ 20 à 30°C inférieure à la température d'entrée du gaz comprimé.

Comme cela a été évoqué ci-dessus, lorsque l'installation est destinée à la découpe laser, le gaz chaud sortant de la sortie de gaz chaud du tube de vortex est préférentiellement destiné à assurer l'expulsion de particules métalliques en fusion hors d'un bain de fusion liquide créé par le faisceau laser. Dans un tel cas, on peut prévoir que la sortie ,de gaz chaud du tube de vortex est raccordée à la tête laser de manière à ce que le gaz chaud soit éjecté de celle-ci par une buse appartenant à cette même tête. Ainsi, la buse précitée peut également être traversée par le faisceau laser, impliquant que l'axe d'éjection de gaz chaud et l'axe de faisceau laser sont alors préférentiellement confondus.

Il est noté que la sortie de gaz chaud du tube de vortex pourrait alternativement être raccordée à une autre tête que la tête laser, sans sortir du cadre de l'invention.

Pour la découpe laser, le gaz comprimé employé est préférentiellement de l'air comprimé. Cependant, il est bien entendu envisagé d'utiliser tout type de gaz de travail connu pour remplir une telle fonction d'expulsion des particules métalliques en fusion hors de la saignée.

Enfin, il est noté qu'un avantage lié à l'utilisation d'un gaz chaud pour assurer en partie ou en totalité l'expulsion des particules en fusion hors de la saignée réside dans le fait que la nature « chaude » de ce gaz limite fortement l'effet de refroidissement des particules métalliques en fusion, ce qui conduit à diminuer sensiblement les risques de blocage de la progression de la découpe.

Comme cela a aussi été évoqué ci-dessus, lorsque l'installation est destinée au soudage laser, le gaz chaud sortant de la sortie de gaz chaud du tube de vortex peut être destiné à assurer un préchauffage des pièces à souder. Dans ce cas, la sortie de gaz chaud du tube de vortex est située en avant par rapport à la tête laser, selon un sens de soudage.

Le gaz chaud sortant de la sortie de gaz chaud du tube de vortex peut alternativement être destiné à assurer une protection du bain de fusion solidifié contre l'air ambiant. La sortie de gaz chaud du tube de vortex est alors située en arrière par rapport à la tête laser, selon un sens de soudage, et préférentiellement en arrière par rapport au bain de fusion généré par le faisceau.

Naturellement, comme cela a été mentionné précédemment, le gaz chaud peut aussi remplir les deux fonctions précitées, en prévoyant plusieurs sorties de gaz chaud sur le tube de vortex concerné.

Pour le soudage laser, le gaz comprimé employé est préférentiellement un gaz neutre ou un gaz comprenant de l'oxygène et/ou du dioxyde de carbone, ce type de gaz étant dit « actif » et étant choisi en fonction de la nature des matériaux à souder, de manière à pouvoir protéger ces derniers au mieux de l'air ambiant pendant la phase solide de refroidissement après soudage.

Par ailleurs, l'invention a également pour objet un procédé de découpe / de soudage laser mis en oeuvre à l'aide d'une installation telle que celle décrite ci-dessus, à savoir en réalisant la découpe / le soudage à l'aide du dispositif de refroidissement précité.

D'autres caractéristiques et avantages de l'invention apparaîtront dans la description détaillée, non limitative, ci-dessous.

### BRÈVE DESCRIPTION DES DESSINS

Cette description sera faite au regard des dessins annexés parmi lesquels;
- la figure 1 représente une vue partielle de face d'une installation de découpe selon un mode de réalisation préféré de la présente invention ;
- la figure 2 représente une vue simplifiée de l'installation de découpe montrée sur la figure 1 ;
- la figure 3 représente une vue partielle de face de l'installation de découpe montrée sur la figure 2, sur laquelle le dispositif de refroidissement de la tête laser à été détaillé;
- la figure 4 représente une vue schématisant une alternative de réalisation pour le dispositif de refroidissement de l'installation de découpe montrée sur la figure 3 ;
- la figure 5 représente une vue schématisant une autre alternative de réalisation pour le dispositif de refroidissement de l'installation de découpe montrée sur la figure 3 ; et
- la figure 6 représente une vue schématique et partielle de face d'une installation de soudage selon un mode de réalisation préféré de la présente invention.

### EXPOSÉ DÉTAILLÉ D'UN MODE DE RÉALISATION PRÉFÉRÉ

En référence aux figures, il va être décrit une installation 1 de découpe / de soudage laser du type laser Nd-YAG, retenu notamment en raison des avantages liés au transport d'un faisceau laser 6 par fibres optiques ou encore en raison des avantages procurés concernant la possibilité de disposer d'une meilleure interaction entre ce faisceau laser 6 et une pièce à découper / à souder (référencée 7). Notons cependant qu'il serait tout à fait approprié d'utiliser un laser CO₂ pour mettre en oeuvre l'invention.

L'invention est destinée à être utilisée pour des pièces d'épaisseur variée, et plus spécifiquement pour des pièces dont l'épaisseur est supérieure à environ 50 mm et pouvant aller au-delà de 100 mm. En tout état de cause, l'invention propose un dispositif de découpe / de soudage laser pour des pièces d'épaisseur importante, la limite communément admise par l'homme du métier étant de 10 mm.

De même, la puissance délivrée au dispositif 1 se situe entre environ 4 et 6 kW, cet intervalle de valeur correspondant à la puissance habituellement utilisée dans les dispositifs de l'art antérieur, et tout à fait adapté pour des conditions de travail du type « chantier », telles que celles rencontrées dans le cadre de l'application privilégiée mais non limitative du démantèlement d'installations nucléaires.

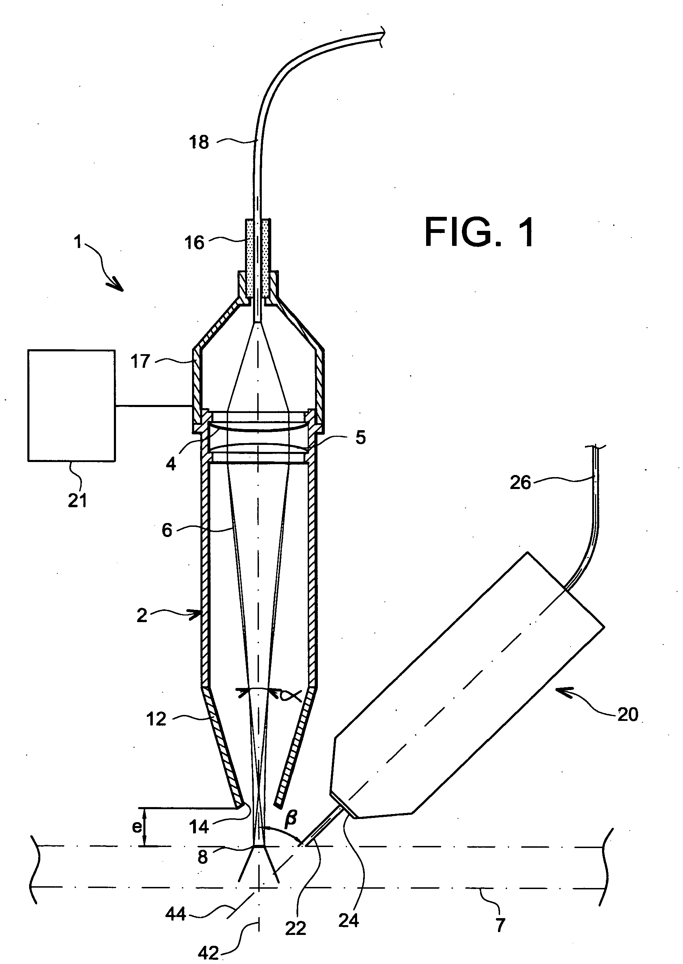

En référence tout d'abord à la figure 1, il est montré une partie d'une installation 1 de découpe laser se présentant sous la forme d'un mode de réalisation préféré de la présente invention, cette installation comprenant une première tête 2, dite tête laser, de forme sensiblement cylindrique et comprenant un diamètre extérieur d'environ 30 mm et une longueur d'environ 250 mm, pour une puissance administrée de l'ordre de 6 kW.

A l'intérieur de la tête, se situent des moyens optiques 4, 5, de préférence constitués par une lentille de collimation 4 et une lentille de convergence 5, ces lentilles étant situées en regard l'une de l'autre.

Les moyens optiques 4, 5 sont traversés par le faisceau laser 6, transporté par une fibre optique 18 raccordée mécaniquement sur la première tête 2. La fibre 18 est donc supportée par un ensemble mécanique 16, 17 comprenant un connecteur 16 enveloppant la fibre 18 et une interface mécanique 17 portant ce connecteur 16. L'interface mécanique 17 est également couplée à la tête 2 de manière à positionner le faisceau laser 6 sortant du câble 18 en regard des moyens optiques 4, 5.

De préférence et en particulier pour limiter l'encombrement de la tête 2, le faisceau laser 6 s'étend à l'intérieur de l'ensemble mécanique sur une distance d'environ 40 à 60 mm. Bien entendu, cet intervalle de valeur n'est pas restrictif et peut être modifié par l'homme du métier.

Les moyens optiques 4, 5 traversés par le faisceau laser 6 produisent une tache focale 8, cette tache focale 8 correspondant approximativement à une largeur d'une saignée effectuée dans une pièce à découper 7 lors de l'utilisation du dispositif 1. La tache focale 8 dispose d'un diamètre de préférence supérieur à 1,5 mm, et étant encore plus préférentiellement de l'ordre de 2 mm. Ceci correspond en effet aux valeurs requises pour assurer une découpe de qualité pour des pièces ayant une épaisseur pouvant aller jusqu'a 100 mm, voire au-delà de cette valeur.

La tête 2 comprend de plus une première buse 12 apte à laisser passer le faisceau laser 6 à travers un orifice de sortie 14, cet orifice de sortie 14 ayant un diamètre légèrement supérieur au diamètre de la tache focale 8.

La tête 2 reçoit le faisceau laser 6 provenant de la fibre optique 18, ce faisceau laser 6 traversant les moyens optiques 4, 5 situés à l'intérieur de la tête 2. Le faisceau laser 6, en sortie de ces moyens optiques 4, 5, comprend un angle de convergence ∝ inférieur à environ 10°. De préférence, l'angle de convergence ∝ est compris entre 5° et 9°. Avec un tel angle de convergence, les contraintes liées à l'écartement « e » entre la pièce à découper et la tête 2 sont sensiblement amoindries. On obtient alors une très bonne qualité de découpe pour un écartement compris entre environ 0,5 et 20 mm, voire pour un écartement de grandeur supérieure pouvant aller au-delà de 50 mm avec la mise en oeuvre de la seconde tête de l'installation qui sera décrite ci-après.

En outre, il est noté que la qualité du faisceau laser généré influe sur le dimensionnement de l'installation de découpe, ainsi que sur ses performances. Ainsi, il a été décelé deux combinaisons particulièrement intéressantes en termes de profondeur de champ et de densité de puissance obtenues. Il s'agit tout d'abord d'une combinaison entre une source laser du type YAG à barreau pompé par lampes flashs, et un diamètre de fibre optique de l'ordre de 600 µm. L'autre combinaison concerne une source laser du type YAG à disque pompé par diodes laser, et un diamètre de fibre optique de l'ordre de 200 µm. Dans ces deux cas, il a avantageusement été obtenu une densité de puissance supérieure à 1,3 kW/mm² sur une profondeur de champ allant au-delà de 50 mm, à des vitesses de soudage de l'ordre de 100 à 150 mm/min.

Dans ce mode de réalisation préféré, l'installation 1 comporte une seconde tête 20 distincte de la première, qui peut donc être déplacée et subir des opérations de maintenance indépendamment de la première tête 2. En d'autres termes, il est de préférence prévu que les deux têtes 2, 20 puissent chacune être retirée de l'installation, sans que l'autre tête n'ait à être déplacée.

La seconde tête 20, également appelée tête d'éjection de gaz, permet d'éjecter du gaz de travail en direction du bain de fusion créé par le faisceau laser sortant de la première tête 2.

Le jet de gaz de travail 22 sort donc de la tête 20 par une buse 24, après avoir été amené vers cette même tête par une canalisation 26 reliée à une source de gaz (non représentée), appartenant aux moyens d'éjection de gaz de travail de l'installation 1.

De préférence, l'éjection s'effectue à une pression inférieure à 10 bars, et encore plus préférentiellement comprise entre environ 1 et 6 bars. La raison de l'emploi d'une telle pression est d'éviter que des particules métalliques en fusion se situant dans la saignée soient refroidies et bloquées avant leur expulsion de la saignée. Il est donc nécessaire d'appliquer des pressions faibles, permettant tout de même au gaz d'effectuer son rôle d'éjecteur de particules métalliques en fusion.

Les gaz de travail susceptibles d'être utilisés sont ceux connus de l'homme du métier, tels que les gaz neutres comme l'azote, l'hélium, l'argon, ou encore les gaz dits actifs, intégrant de l'oxygène et/ou du dioxyde de carbone.

Comme cela sera évoqué plus en détails ci-après, il est noté que les têtes 2 et 20 sont susceptibles d'être déconnectées de l'installation de découpe 1. La déconnexion peut s'effectuer à l'aide de moyens pilotables à distance, comme cela est connu de l'art antérieur.

En outre, la spécificité de l'invention réside dans la présence du dispositif de refroidissement 21 à tube de vortex. Ce dispositif 21 qui est couplé à la tête laser 2 sera décrit en détails ci-après.

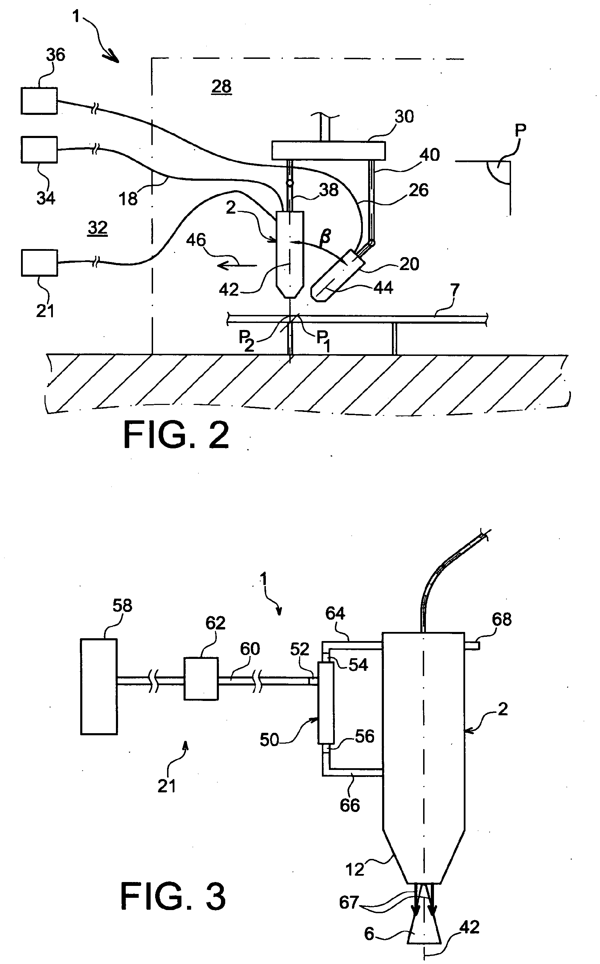

En référence à présent à la figure 2 montrant l'installation de découpe de façon plus complète, on peut s'apercevoir qu'une partie de celle-ci peut être déportée sur le chantier concerné, qui prend la forme d'un milieu irradiant 28 dans le cadre du démantèlement d'installations nucléaires.

Cette partie intègre globalement un porteur 30 capable d'être piloté à distance, donc depuis un milieu 32 non-irradiant dans lequel sont également de préférence situées la source laser 34 raccordée à la fibre optique 18, ainsi que la source de gaz de travail 36 raccordée à la canalisation 26. Elle comporte également bien entendu les deux têtes 2, 20, qui sont respectivement raccordées au porteur 30 par l'intermédiaire de bras manipulateurs 38, 40, également pilotables à distance depuis le milieu 32. Ces deux bras permettent non seulement d'ajuster la position de chacune des têtes 2, 20 par rapport à la pièce à découper 7, mais également d'ajuster leurs positions relatives.

Comme cela est visible sur la figure 2, on peut apercevoir que les première et seconde têtes 2, 20 sont disposées de manière à ce que le faisceau laser sorte de la première tête 2 selon un axe de faisceau laser 42 incliné par rapport à un axe d'éjection de gaz 44 selon lequel le gaz de travail est éjecté de la seconde tête 20. Plus précisément, on recherche habituellement à ce que l'axe de faisceau laser 42 traverse orthogonalement la pièce à découper 7. Ainsi, l'axe d'éjection de gaz 44 est donc incliné par rapport à la direction orthogonale à la pièce 7, mais se trouve de préférence agencé dans un plan P intégrant également l'axe de faisceau laser 42 et la saignée rectiligne créée par le faisceau, lorsqu'une telle saignée est réalisée. En outre, il est prévu, comme cela est montré sur la figure 2, que dans ce plan P parallèle au sens de découpe 46 et passant par les deux axes 42, 44, ces deux derniers soient inclinés l'un par rapport à l'autre d'un angle β compris entre 20° et 30°. Cette valeur permet une éjection optimale des particules métalliques hors de la saignée, et est de préférence obtenue en plaçant la seconde tête 20 en arrière par rapport à la première tête 2 selon le sens de découpe 46, et en faisant en sorte que l'axe incliné 44 s'étendent vers l'avant en se rapprochant de la pièce à découper.

Néanmoins, même si cet axe 44 est incliné, ce qui implique que le jet de gaz de travail se rapproche du faisceau laser, on peut prévoir que le point d'impact P1 du gaz de travail sur la pièce à découper 7 soit situé en arrière du point d'impact P2 du faisceau laser sur cette même pièce 7, comme cela est clairement visible sur la figure 2. Néanmoins, il est noté que pour obtenir des performances de découpe optimales, on prévoit un réglage impliquant une identité entre les points d'impact P1 et P2.

En référence à présent à la figure 3, on peut voir de façon plus détaillée le dispositif de refroidissement 21 de la tête laser 2.

Globalement, celui-ci comporte un tube de vortex 50, connu en soi, comme par exemple le modèle 3225 de la société EXAIR. Le tube 50, d'une longueur pouvant être de l'ordre de 150 mm, comporte classiquement une entrée de gaz comprimé 52, une sortie de gaz froid 54, ainsi qu'une sortie de gaz chaud 56.

L'entrée 52 est raccordée par une canalisation 60 à une source de gaz comprimé 58, qui peut éventuellement être la même que la source 36 destinée à assurer l'alimentation de la tête 20 en gaz de travail. Néanmoins, il est noté que l'air comprimé est préféré pour l'alimentation du tube de vortex 50, la pression recherchée étant inférieure à 10 bars, et de préférence comprise entre 4 et 6 bars. Pour obtenir la pression désirée, un régulateur de pression 62 équipé d'un filtre est placé entre le tube 50 et la source de gaz comprimé 58.

En outre, on peut voir que la sortie de gaz froid 54 communique avec la tête 2, grâce à une canalisation 64 amenant le gaz froid au niveau d'une partie supérieure de cette tête laser 2. Une fois intégré dans la tête 2, le gaz froid emprunte un chemin déterminé pour assurer le refroidissement de la tête, avant de s'échapper par un évent d'éjection 68 prévu à cet effet.

De façon analogue, on peut voir que la sortie de gaz chaud 56 communique avec la tête 2, grâce à une canalisation 66 amenant le gaz chaud au niveau d'une partie plus inférieure de cette tête laser 2. Une fois intégré dans la tête 2, le gaz chaud emprunte un chemin déterminé de manière à pouvoir ensuite être éjecté de la buse 12, coaxialement au faisceau laser 6 comme le montrent les flèches 67 de la figure 3. Dans ce mode de réalisation préféré, l'axe de faisceau laser 42 est par conséquent identique à l'axe d'éjection de gaz chaud.

Par conséquent, ce jet de gaz chaud participe activement à l'expulsion des particules métalliques en fusion hors de la saignée durant l'opération de découpe, conjointement avec le jet de gaz de travail issu de la tête 20.

Néanmoins, il est indiqué que l'installation 1 de découpe pourrait être telle que le gaz employé pour assurer l'expulsion des particules métalliques soit uniquement constitué par le gaz chaud sortant de la buse 12, auquel cas la présence de la seconde tête 20 ne serait donc plus requise. Alternativement, cette seconde tête pourrait tout de même être conservée, et alimentée en gaz non plus par le gaz provenant de la source 36, mais par le gaz chaud issu de la sortie 56 du tube de vortex 50.

De façon plus générale, lorsqu'il est décidé de n'employer que le gaz chaud pour assurer l'expulsion des particules métalliques en fusion hors de la saignée, il est de préférence fait en sorte que ce gaz chaud soit éjecté d'une façon identique ou similaire à celle décrite ci-dessus pour le gaz de travail issu de la tête 20, afin d'optimiser au maximum les performances de découpe.

Le tube de vortex 50 est alors conçu et réglé de manière à produire environ 80% de gaz froid et environ 20% de gaz chaud, de même qu'il est conçu de manière à produire du gaz chaud à une température d'environ 80 à 100°C supérieure à une température d'entrée du gaz comprimé, et à produire du gaz froid à une température d'environ 20 à 30°C inférieure à la température d'entrée du gaz comprimé.

A titre d'exemple indicatif, on fait en sorte que le gaz comprimé soit injecté à une pression d'environ 4 bars sous une température de l'ordre de 25°C, pour obtenir un débit de gaz froid d'environ 330 1/min à une température de 0°C, et un débit de gaz chaud d'environ 83 1/min à une température de 115°C.

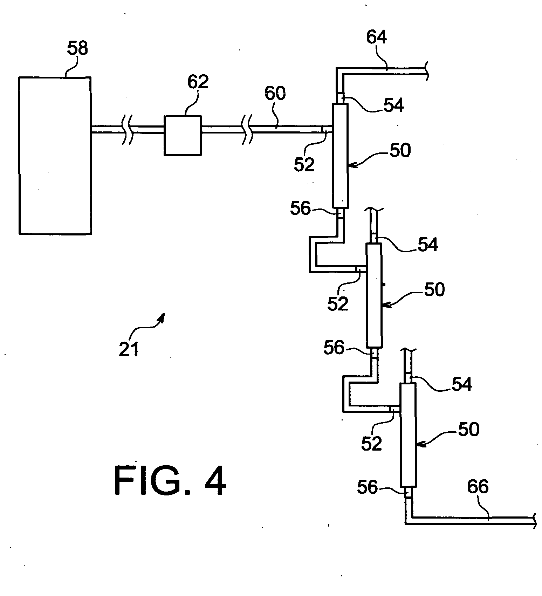

Pour pouvoir augmenter la température du gaz chaud sortant du dispositif de refroidissement 21, il est possible d'utiliser une pluralité de tubes de vortex 50 montés en cascade, comme le montre la figure 4. Pour ce faire, le premier tube 50 est agencé de façon identique à celui montré sur la figure 3, à l'exception du fait que sa sortie de gaz chaud 56 est raccordée de façon à communiquer avec l'entrée de gaz comprimé 52 du second tube de vortex 50. Ce type de raccordement est réitéré avec autant de tubes de vortex que nécessaire, en prévoyant toujours que la sortie de gaz chaud d'un tube de vortex alimente l'entrée du tube de vortex lui étant directement consécutif.

Ainsi, la sortie de gaz chaud 56 du tube vortex 50 situé le plus en aval dans la cascade peut être raccordée à la tête laser 2 par l'intermédiaire de la canalisation 66 d'une manière identique à celle rencontrée avec le dispositif 21 de la figure 3, tandis que les sorties de gaz froid 54 des tubes 50 peuvent par exemple chacune être raccordées à la canalisation 64 se dirigeant vers la partie supérieure de la tête laser.

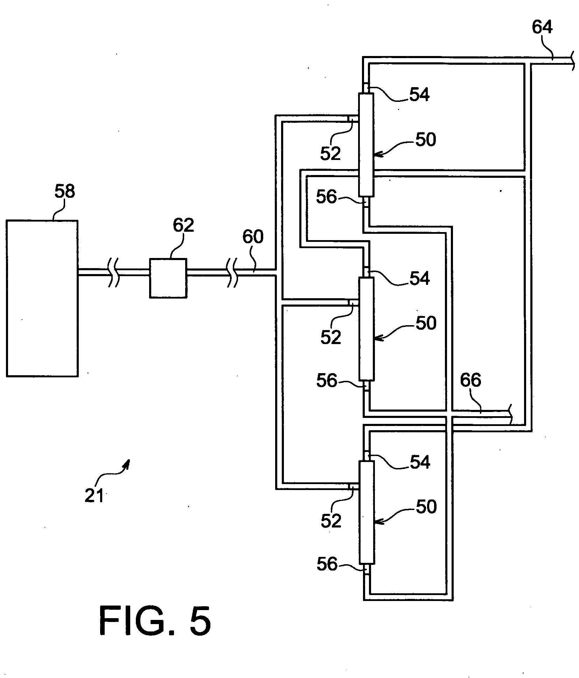

Lorsqu'un seul tube de vortex est suffisant pour atteindre les températures de gaz chaud et de gaz froid souhaitées, et que le débit de ces flux de gaz doit être augmenté, il et alors possible d'employer plusieurs tubes de vortex 50 montés en parallèle, comme cela est montré sur la figure 5.

Dans ce cas, chacune des entrées 52 est alimentée en gaz comprimé par la canalisation 60, les sorties de gaz froid 54 sont toutes raccordées à la canalisation 64 en direction de la tête 2, tandis que les sorties d'air chaud 56 sont raccordées sur la canalisation 66 également en direction de la tête laser 2.

De ce fait, dans les conditions exposées ci-dessus intégrant trois tubes de vortex, on obtient un débit de gaz froid d'environ 3 fois 330 1/min à une température de 0°C, et un débit de gaz chaud d'environ trois fois 83 1/min à une température de 115°C.

Naturellement, dans le cas où il est employé plusieurs tubes de vortex 50 pour le dispositif 21, ceux-ci peuvent être agencés selon une disposition hybride entre la configuration en parallèle et la configuration en cascade, sans sortir du cadre de l'invention.

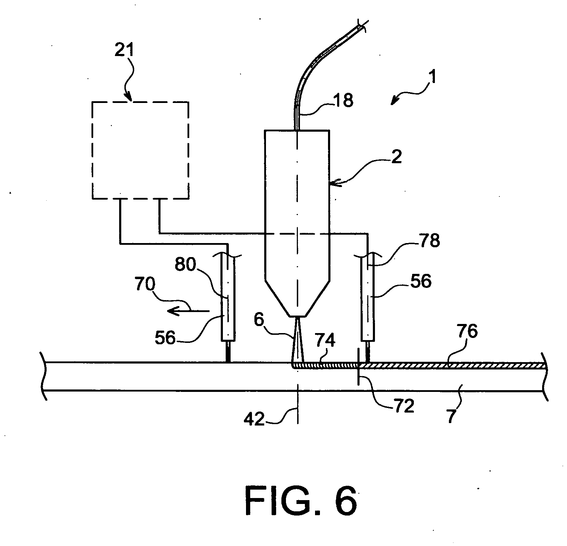

L'installation 1 montrée sur la figure 6 est une installation similaire à celle montrée sur les figures précédentes, à la différence qu'elle n'est non plus destinée à la découpe, mais au soudage laser de pièces 7.

Globalement, la tête laser 2 est identique à celle déjà décrite, tandis que la seconde tête 20 est de préférence supprimée. Le dispositif de refroidissement 21 peut quant à lui prendre l'une quelconque des formes exposées ci-dessus, le gaz chaud récupéré pouvant alors servir au préchauffage des pièces 7, et/ou à la protection du bain de fusion solidifié contre l'air ambiant.

Dans ce dernier cas, il est préférentiellement employé un gaz neutre ou un gaz comprenant de l'oxygène et/ou du dioxyde de carbone, ce type de gaz étant dit « actif » et étant choisi en fonction de la nature des matériaux à souder, de manière à pouvoir protéger ces derniers au mieux de l'air ambiant pendant sa phase solide de refroidissement après soudage.

A titre d'exemple iliustratifs, il peut s'agir d'un gaz binaire ou ternaire à base d'argon ou d'hélium. Dans le cas où le matériau à souder est un acier fortement allié, le gaz peut comprendre 96,5% d'argon, 1,5% d'oxygène et 2% de dioxyde de carbone ou encore 96% d'argon, 1% d'hydrogène et 3% de dioxyde de carbone, tandis que dans le cas où le matériau à souder est un acier faiblement allié, le gaz peut comprendre 70% d'argon, 10% d'oxygène et 20% de dioxyde de carbone.

Il est précisé que la fonction de protection du bain de fusion solidifié, c'est-à-dire de la partie de la soudure qui provient bien évidemment du bain de fusion liquide, mais qui s'est déjà solidifiée et qui est en phase de refroidissement, consiste notamment à éviter les problèmes de fissuration des matériaux durant cette phase de refroidissement, et également à éviter la nitruration et l'oxydation du métal soudé.

Pour ce faire, une première sortie de gaz chaud 56 est donc prévue pour se situer en arrière de la tête 2 dans le sens de soudage 70, et de préférence en arrière de la limite 72 entre le bain de fusion à l'état liquide 74, et le bain de fusion solidifié en cours de refroidissement 76. Bien entendu, la première sortie 56 pourrait être située différemment, comme par exemple en regard de la limite 72 précitée. A titre d'exemple, la distance entre l'axe de faisceau laser 42 et l'axe 78 de la première sortie 56 peut être comprise entre 0 et 40 mm.

Par ailleurs, il peut être prévu une seconde sortie d'air chaud 56 pour assurer le préchauffage des pièces 7 à souder. Dans ce cas, cette sortie est située en avant par rapport à la tête laser 2 selon le sens de soudage 70, et la distance entre l'axe de faisceau laser 42 et l'axe 80 de la seconde sortie 56 peut être compris entre 0 et 100 mm.

Dans le mode de réalisation préféré représenté, les trois axes 56, 42, 78 sont situés dans un même plan, intégrant également la soudure, et sont de préférence parallèles les uns aux autres.

Naturellement, il peut être mis en oeuvre l'une seulement des deux sorties 56, en fonction des besoins rencontrés pour le soudage. Dans le cas où les deux fonctions précitées sont souhaitées, il est noté que les deux sorties 56 sont soit directement prévues sur le tube de vortex associé, soit issues d'une bifurcation (non représentée) montée sur la sortie unique du tube. En tout état de cause, il est employé des moyens adaptés et classiques permettant de régler la répartition du débit d'air chaud vers ces deux entrées 56. Lorsque la disposition de la figure 5 est adoptée pour le dispositif de refroidissement 21, et qu'il est donc délivré un débit d'air chaud total de l'ordre de 240 à 250 1/min, la répartition est effectuée de manière à obtenir un débit d'air chaud d'au moins 230 1/min pour le préchauffage, et un débit d'air chaud inférieur à 20 1/min pour la protection du bain de fusion solidifié.

La présente invention concerne également un procédé de découpe / de soudage laser capable d'être mis en oeuvre par l'installation 1, dans les conditions qui viennent d'être exposées ci-dessus.

L'invention trouve une pluralité d'applications, dont notamment celles relatives au domaine du nucléaire, et plus particulièrement celle du démantèlement d'installations nucléaires. On peut alors citer comme exemples la découpe d'éléments irradiants et/ou contaminés dans une cellule de casse, le démantèlement d'une cellule avec la phase de découpe de toutes ses installations internes ou encore des interventions très spécifiques sur des réacteurs mis à l'arrêt ou accidentés.

En outre, cette invention peut également être utilisée dans l'industrie automobile ou dans l'industrie navale dans laquelle les tôles épaisses sont largement répandues. L'invention permettrait ainsi de supplanter les techniques de chalumeaux et de torches à plasma traditionnellement employées dans ce domaine.

## Revendications

1. Installation (1) de découpe / de soudage laser comprenant une tête laser (2) capable de délivrer un faisceau laser (6) destiné à générer un bain de fusion (74), ladite installation comportant également un dispositif de refroidissement (21) de ladite tête laser, ledit dispositif de refroidissement (21) comportant au moins un tube de vortex (50) alimenté en gaz comprimé, ledit tube de vortex (50) disposant d'au moins une sortie de gaz froid (54) communiquant avec ladite tête laser (2) de manière à ce que le gaz froid pénètre à l'intérieur de cette tête laser pour le refroidissement de celle-ci, ainsi que d'au moins une sortie de gaz chaud (56),
**caractérisée en ce que** le dispositif de refroidissement (21) comporte une pluralité de tubes de vortex (50) alimentés en gaz comprimé.

2. Installation (1) selon la revendication 1, **caractérisée en ce que** les tubes de vortex (50) alimentés en gaz comprimé sont montés en parallèle.

3. Installation (1) selon la revendication 1, **caractérisée en ce que** les tubes de vortex (50) alimentés en gaz comprimé sont montés en cascade, la sortie de gaz chaud (56) d'un tube de vortex (50) alimentant une entrée (52) d'un tube de vortex (50) lui étant directement consécutif.

4. Installation (1) selon l'une quelconque des revendications précédentes, **caractérisée en ce que** ledit tube de vortex (50) est conçu de manière à produire environ 80% de gaz froid et environ 20% de gaz chaud.

5. Installation (1) selon l'une quelconque des revendications précédentes, **caractérisée en ce que** ledit tube de vortex (50) est conçu de manière à produire du gaz chaud à une température d'environ 80 à 100°C supérieure à une température d'entrée du gaz comprimé, et à produire du gaz froid à une température d'environ 20 à 30°C inférieure à la température d'entrée du gaz comprimé.

6. Installation (1) selon l'une quelconque des revendications précédentes, **caractérisée en ce qu'**il s'agit d'une installation de découpe laser.

7. Installation (1) selon la revendication 6, **caractérisée en ce que** ledit gaz chaud sortant de ladite sortie de gaz chaud (56) du tube de vortex (50) est destiné à assurer l'expulsion de particules métalliques en fusion hors d'un bain de fusion (74) créé par ledit faisceau laser (6).

8. Installation (1) selon la revendication 7, **caractérisée en ce que** ladite sortie de gaz chaud (56) du tube de vortex (50) est raccordée à ladite tête laser (2) de manière à ce que ledit gaz chaud soit éjecté de celle-ci par une buse (12) appartenant à cette même tête.

9. Installation (1) selon la revendication 8, **caractérisée en ce que** ladite buse (12) est également traversée par ledit faisceau laser (6).

10. Installation (1) selon l'une quelconque des revendications 6 à 9, **caractérisée en ce que** ledit gaz comprimé est de l'air comprimé.

11. Installation (1) selon l'une quelconque des revendications précédentes, **caractérisée en ce qu'**il s'agit d'une installation de soudage laser.

12. Installation (1) selon la revendication 11, **caractérisée en ce que** ledit gaz chaud sortant de ladite sortie de gaz chaud (56) du tube de vortex (50) est destiné à assurer un préchauffage des pièces à souder (7).

13. Installation (1) selon la revendication 12, **caractérisée en ce que** ladite sortie de gaz chaud (56) du tube de vortex (50) est située en avant par rapport à ladite tête laser (2), selon un sens de soudage (70).

14. Installation (1) selon la revendication 11, **caractérisée en ce que** ledit gaz chaud sortant de ladite sortie de gaz chaud (56) du tube de vortex (50) est destiné à assurer une protection du bain de fusion solidifié (76), contre l'air ambiant.

15. Installation (1) selon la revendication 14, **caractérisée en ce que** ladite sortie de gaz chaud (56) du tube de vortex (50) est située en arrière par rapport à ladite tête laser (2), selon un sens de soudage (70).

16. Installation (1) selon la revendication 11, **caractérisée en ce que** ledit gaz chaud sortant de ladite sortie de gaz chaud (56) du tube de vortex (50) est destiné à assurer un préchauffage des pièces à souder (7), ainsi qu'une protection du bain de fusion solidifié (76) contre l'air ambiant.

17. Installation (1) selon l'une quelconque des revendications 11 à 16, **caractérisée en ce que** ledit gaz comprimé est un gaz neutre ou un gaz comprenant de l'oxygène et/ou du dioxyde de carbone.

18. Procédé de découpe / de soudage laser mis en oeuvre à l'aide d'une installation selon l'une quelconque des revendications précédentes.

## Claims

1. A laser cutting / welding installation 91) comprising a laser head (2) capable of delivering a laser beam (6) designed to generate a solder bath (74), said installation also comprising a cooling device (21) of said laser head, said cooling device (21) comprising at least one vortex tube (50) supplied with compressed gas, said vortex tube (50) having at least one cold gas outlet (54) communicating with said laser head (2) such that the cold gas penetrates inside this laser head for cooling thereof, as well as at least one hot gas outlet (56), **characterized in that** the cooling device (21) comprises a plurality of vortex tubes (50) supplied with compressed gas.

2. The installation (1) according to claim 1, **characterized in that** the vortex tubes (50) supplied with compressed gas are mounted in parallel.

3. The installation (1) according to claim 1, **characterized in that** the vortex tubes (50) supplied with compressed gas are cascade mounted, the hot gas outlet (56) of one vortex tube (50) supplying an inlet (52) of a vortex tube (50) directly consecutive thereto.

4. The installation (1) according to one of the preceding claims, **characterized in that** said vortex tube (50) is designed so as to produce approximately 80% cold gas and approximately 20% hot gas.

5. The installation (1) according to one of the preceding claims, **characterized in that** said vortex tube (50) is designed so as to produce hot gas at a temperature approximately 80 to 100°C higher than an inlet temperature of the compressed gas, and to produce cold gas at a temperature approximately 20 to 30°C lower than the inlet temperature of the compressed gas.

6. The installation (1) according to one of the preceding claims, **characterized in that** it involves a laser cutting installation.

7. The installation (1) according to claim 6, **characterized in that** said hot gas leaving said hot gas outlet (56) of the vortex tube (50) is designed to ensure the expulsion of the molten metallic particles outside a solder bath (74) created by said laser beam (6).

8. The installation (1) according to claim 7, **characterized in that** said hot gas outlet (56) of the vortex tube (50) is connected to said laser head (2) such that said hot gas is ejected therefrom by a nozzle tip (12) belonging to this same head.

9. The installation (1) according to claim 8, **characterized in that** said nozzle tip (12) is also passed through by said laser beam (6).

10. The installation (1) according to any of claims 6 to 9, **characterized in that** said compressed gas is compressed air.

11. The installation (1) according to any of the preceding claims, **characterized in that** it involves a laser welding installation.

12. The installation (1) according to claim 11, **characterized in that** said hot gas leaving said hot gas outlet (56) of the vortex tube (50) is designed to ensure preheating of the parts to be welded (7).

13. The installation (1) according to claim 12, **characterized in that** said hot gas outlet (56) of the vortex tube (50) is located in front in relation to said laser head (2), in a direction of welding (70).

14. The installation (1) according to claim 11, **characterized in that** said hot gas leaving said hot gas outlet (56) of the vortex tube (50) is designed to ensure protection of the solidified solder bath (76) against ambient air.

15. The installation (1) according to claim 14, **characterized in that** said hot gas outlet (56) of the vortex tube (50) is located behind in relation to said laser head (2), in a direction of welding (70).

16. The installation (1) according to claim 11, **characterized in that** said hot gas leaving said hot gas outlet (56) of the vortex tube (50) is designed to ensure preheating of the parts to be welded (7), as well as protection of the solidified solder bath (76) against ambient air.

17. The installation (1) according to any of claims 11 to 16, **characterized in that** said compressed gas is an inert gas or a gas comprising oxygen and/or carbon dioxide.

18. A laser cutting / welding method implemented using an installation according to any of the preceding claims.

## Patentansprüche

1. Installation (1) zum Laserschneiden/-schweißen umfassend einen Laserkopf (2), der einen Laserstrahl (6) liefern kann, welcher bestimmt ist , ein Schmelzbad (74) zu erzeugen, wobei die Installation gleichermaßen eine Kühlvorrichtung (21) des Laserkopfs umfasst, wobei die Kühlvorrichtung wenigstens ein mit einem komprimierten Gas gespeistes Vortexrohr (50) umfasst, welches Vortexrohr (50) wenigstens einen Ausgang (54) für kaltes Gas umfasst, das so mit dem Laserkopf (2) verbunden ist, dass das kalte Gas zur Kühlung ins Innere des Laserkopfs eindringt, sowie wenigstens einen Ausgang für heißes Gas (56) aufweiset,
**dadurch gekennzeichnet, dass** die Kühlvorrichtung (21) mehrere mit einem komprimierten Gas gespeiste Vortexrohre (50) umfasst.

2. Installation (1) nach Anspruch 1, **dadurch gekennzeichnet, dass** mit einem komprimierten Gas gespeiste Vortexrohre (50) parallel angeordnet sind.

3. Installation (1) nach Anspruch 1, **dadurch gekennzeichnet, dass** die mit einem komprimierten Gas gespeisten Vortexrohre (50) in Reihe angeordnet sind und der Ausgang für heißes Gas (56) eines Vortexrohrs (50) den Eingang (52) eines direkt folgenden Vortexrohrs (50) speist.

4. Installation (1) nach einem der vorherigen Ansprüche, **dadurch gekennzeichnet, dass** das Vortexrohr (50) so ausgeführt ist, dass es etwa 80% kaltes Gas und etwa 20% heißes Gas erzeugt.

5. Installation (1) nach einem der vorherigen Ansprüche, **dadurch gekennzeichnet, dass** das Vortexrohr (50) so ausgeführt ist, dass heißes Gas mit einer Temperatur etwa zwischen 80° und 100°C über einer Eingangstemperatur des komprimierten Gases produziert wird, und kaltes Gas mit einer Temperatur etwa zwischen 20° und 30°C unter einer Eingangstemperatur des komprimierten Gases erzeugt wird.

6. Installation (1) nach einem der vorherigen Ansprüche, **dadurch gekennzeichnet, dass** es sich um eine Laserschneideinstallation handelt.

7. Installation (1) nach Anspruch 6, **dadurch gekennzeichnet, dass** das aus dem Ausgang für heißes Gas (56) des Vortexrohrs (50) austretende heiße Gas darauf ausgerichtet ist, die Ausscheidung metallischer Teilchen aus der Schmelze aus einem Schmelzbad (74), das durch den Laserstrahl (6) erzeugt wird, sicherzusteilen.

8. Installation (1) nach Anspruch 7, **dadurch gekennzeichnet, dass** der Ausgang (56) des Vortexrohrs (50) derart an den Laserkopf (2) angeschlossen ist, dass das heiße Gas aus einer zum Kopf gehörenden Düse (12) ausgestoßen wird.

9. Installation (1) nach Anspruch 8, **dadurch gekennzeichnet, dass** die Düse (12) ebenfalls von dem Laserstrahl (6) durchquert wird.

10. Installation (1) nach einem der Ansprüche 6 bis 9, **dadurch gekennzeichnet, dass** es sich bei dem komprimierten Gas um komprimierte Luft handelt.

11. Installation (1) nach einem der vorherigen Ansprüche, **dadurch gekennzeichnet, dass** es sich um eine Laserschweißinstallation handelt.

12. Installation (1) nach Anspruch 11, **dadurch gekennzeichnet, dass** das aus dem Ausgang für heißes Gas (56) des Vortexrohrs (50) austretende heiße Gas bestimmt ist, ein Vorheizen der zu schweißenden Stücke (7) sicherzustellen.

13. Installation (1) nach Anspruch 12, **dadurch gekennzeichnet, dass** der Ausgang für heißes Gas (56) des Vortexrohrs (50) in Schweißrichtung (70) vor dem Laserkopf (2) sitzt.

14. Installation (1) nach Anspruch 11, **dadurch gekennzeichnet, dass** das aus dem Ausgang für heißes Gas (56) des Vortexrohrs (50) austretende heiße Gas einen Schutz des verfestigten Schmelzbads (76) vor der Umgebungsluft sicherstellt.

15. Installation (1) nach Anspruch 14, **dadurch gekennzeichnet, dass** der Ausgang für heißes Gas (56) des Vortexrohrs (50) in Schweißrichtung (70) hinter dem Laserkopf (2) sitzt.

16. Installation (1) nach Anspruch 11, **dadurch gekennzeichnet, dass** das aus dem Ausgang für heißes Gas (56) des Vortexrohrs (50) austretende heißes Gas eine Vorerhitzung der zu schweißenden Stücke (7), ebenso wie einen Schutz des verfestigten Schmelzbads (76) vor der Umgebungsluft, sicherstellt.

17. Installation (1) nach einem der Ansprüche 11 bis 16, **dadurch gekennzeichnet dass** das komprimierte Gas ein inertes Gas oder ein Gas, das Sauerstoff und/oder Kohlendioxid enthält, ist.

18. Laserschneid-/Schweiß-Verfahren, ausgeführt mit Hilfe einer Installation nach einem der vorherigen Ansprüche.
